(19) Europäisches Patentamt
European Patent Office
Office européen des brevets

(11) **EP 4 008 857 A1**

(12) **DEMANDE DE BREVET EUROPEEN**

(43) Date de publication:
**08.06.2022 Bulletin 2022/23**

(21) Numéro de dépôt: **21211597.6**

(22) Date de dépôt: **01.12.2021**

(51) Classification Internationale des Brevets (IPC):
**E04H 4/12** *(2006.01)* **B01D 37/04** *(2006.01)*
**F04D 15/00** *(2006.01)*

(52) Classification Coopérative des Brevets (CPC):
**E04H 4/1209; B01D 37/048; E04H 4/129**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.12.2020 FR 2012584**

(71) Demandeur: **Innovation Pool Factory
10000 Troyes (FR)**

(72) Inventeurs:
• **SCHMIT, Edouard
10260 SAINT PARRES LES VAUDES (FR)**
• **LOPEZ, Yannick
10190 MESNIL SAINT LOUP (FR)**

(74) Mandataire: **Marconnet, Sébastien
Cabinet Sébastien Marconnet
1 Quinquies rue Basse de la Terrasse
(Bâtiment A)
92190 Meudon (FR)**

(54) **SYSTEME DE FILTRATION INTELLIGENT POUR UNE PISCINE, UN SPA, OU UN BASSIN NATUREL**

(57) La présente invention porte sur un système de filtration (10) pour une piscine, un bassin naturel, ou un spa comportant une unité de commande domotique (17) apte à recevoir en entrée des paramètres d'entrée consistant en : un volume d'eau (Vol), une température d'eau (T_eau), une présence et/ou une activation (Ch_act) d'un dispositif de chauffage (16), une consigne de température d'eau (T_cons),
- l'unité de commande domotique (17) étant configurée pour adapter un nombre de pas de filtration mis en œuvre par le système de filtration (10) en fonction des paramètres d'entrée précités,
- un pas de filtration ayant une durée prédéterminée,
- l'unité de commande domotique (17) étant en outre configurée pour faire varier, au cours de la durée prédéterminée d'un pas de filtration, un mode de fonctionnement du système de filtration (10) lié à une vitesse de rotation de la pompe de filtration (12).

[Fig 1]

EP 4 008 857 A1

**Description**

La présente invention porte sur un système de filtration intelligent pour une piscine, un spa, ou un bassin naturel. Dans la suite de la description, le terme "bassin" englobe ces trois différentes configurations possibles.

Un système de filtration est composé au minimum d'un élément filtrant et d'une pompe dite "pompe de filtration" permettant de faire circuler l'eau du bassin à l'intérieur de l'élément filtrant. L'élément filtrant, qui peut prendre notamment la forme d'un filtre à sable, d'une cartouche de filtration ou d'une poche de filtration, a pour fonction de retenir les impuretés contenues dans le bassin.

Il est difficile de définir combien de temps doit fonctionner le système de filtration du bassin, dans la mesure où de nombreux paramètres entrent en ligne de compte.

La durée de filtration est généralement calculée en fonction de l'évolution de la température de l'eau. En effet, la température de l'eau a une grande influence sur la durée de filtration car plus l'eau est chaude, plus l'environnement est propice au développement de micro-organismes (algues, virus, bactéries, champignons, ...) et il sera donc nécessaire de prévoir une longue durée de filtration. A l'inverse, plus la température de l'eau est faible, moins l'environnement est propice au développement des micro-organismes et il sera donc possible de prévoir une durée de filtration plus courte.

Un moyen mnémotechnique connu permet de calculer grossièrement la durée de filtration suivant la formule suivante:

$$\text{Durée de filtration (en heures)} = \text{température de l'eau (en°C)} / 2.$$

Cette formule est valable pour la période allant du printemps à l'automne. En hiver, si la piscine n'est pas en hivernage passif et que la température de l'eau est inférieure à 14°C, il est possible de diviser par 3 la température de l'eau pour obtenir le temps de filtration nécessaire. Pour une température inférieure à 12°C, les micro-organismes ne peuvent quasiment plus proliférer et il devient alors possible de stopper la filtration et de réduire considérablement les doses de produits chimiques.

Par ailleurs, les cycles de filtrations sont un autre paramètre permettant de calculer le temps de filtration nécessaire. La durée d'un cycle de filtration peut être calculée par la formule suivante:

$$\text{cycle de filtration (en heures)} = \text{volume d'eau piscine (en m}^3) / \text{le débit pompe (en m}^3/\text{h)}.$$

Le tableau ci-dessous indique les temps de filtration nécessaires en fonction de la température de l'eau:

| Eau à moins de 10°C | Arrêt presque total et réduction forte des produits chimiques | 0 cycle de filtration |
|---|---|---|
| Eau entre 10 et 14°C | Temps de filtration = température de l'eau divisée par 3 | Plus ou moins 1 cycle de filtration |
| Eau entre 15 et 20°C | Temps de filtration = température de l'eau divisée par 2 | Plus ou moins 2 cycles de filtration |
| Eau entre 20 et 24°C | Temps de filtration = température de l'eau divisée par 2 | Plus ou moins 3 cycles de filtration |
| Eau entre 25 et 29°C | Temps de filtration = température de l'eau divisée par 2 | Au moins 3 à 4 cycles de filtration |
| Eau à 30°C ou plus | Il est recommandé de filtrer en permanence, ou au moins pendant toute la journée | |

Toutefois, les calculs précédents ne prennent pas en compte une activation du chauffage du bassin, ni la fréquentation du bassin. Il n'est pas non plus tenu compte de l'utilisation dynamique des différentes vitesses de la pompe de filtration, dans le cas d'une pompe à vitesse variable.

Il existe donc le besoin d'un système prenant en compte ces paramètres qui ont un impact sur l'encrassement du bassin ainsi que sur la consommation électrique du système de filtration.

L'invention vise à combler efficacement ce besoin en proposant un système de filtration pour une piscine, un bassin naturel, ou un spa comportant:

- au moins une pompe de filtration à vitesse variable,
- au moins un élément filtrant,
- un capteur de température d'eau, et
- une unité de commande domotique en communication avec la pompe de filtration à vitesse variable,
- ladite unité de commande domotique étant apte à recevoir en entrée des paramètres d'entrée consistant en :

  - un volume d'eau de la piscine, du bassin naturel, ou du spa,
  - une température d'eau retournée par le capteur de température,
  - une présence et/ou une activation d'un dispositif de chauffage,
  - une consigne de température d'eau,

- l'unité de commande domotique étant configurée pour adapter un nombre de pas de filtration mis en œuvre par le système de filtration en fonction des paramètres d'entrée précités,
- un pas de filtration ayant une durée prédéterminée,
- l'unité de commande domotique étant en outre configurée pour faire varier, au cours de la durée prédéterminée d'un pas de filtration, un mode de fonctionnement du système de filtration lié à une vitesse de rotation de la pompe de filtration.

L'invention permet ainsi, grâce à la prise en compte des différents paramètres d'entrée, de filtrer un bassin au plus juste afin d'effectuer des économies d'énergie en adaptant la vitesse de rotation de la pompe en fonction desdits paramètres d'entrée.

Selon une réalisation de l'invention, l'unité de commande domotique est également apte à prendre en compte comme paramètre d'entrée une activation d'un mode baignade.

Selon une réalisation de l'invention, l'unité de commande domotique est configurée, au cours de la durée prédéterminée du pas de filtration, pour faire fonctionner le système de filtration:

- dans un premier mode de fonctionnement dit mode "boost" dans lequel un débit du système de filtration est élevé,
- puis sélectivement:

  - dans un deuxième mode de fonctionnement permettant au dispositif de chauffage de fonctionner de façon optimale, dit mode "chauffage"; dans lequel le débit du système de filtration est intermédiaire, ou
  - dans un troisième mode de fonctionnement, dit mode "éco", dans lequel le débit du système de filtration est bas.

Selon une réalisation de l'invention, une vitesse de rotation de la pompe de filtration présente une rampe d'accélération avant d'atteindre une vitesse de rotation correspondant au premier mode de fonctionnement.

Selon une réalisation de l'invention, une vitesse de rotation de la pompe de filtration présente une rampe de décélération lors d'un passage du mode "boost" vers le mode "chauffage" ou le mode "éco".

Selon une réalisation de l'invention, une durée d'une phase de fonctionnement du système de filtration dans le mode "boost" est ajustée en fonction de l'activation ou non du mode baignade.

Selon une réalisation de l'invention, le mode "chauffage" est mis en œuvre dans le cas où la température d'eau est inférieure à la consigne de température d'eau.

Selon une réalisation de l'invention, le volume d'eau de la piscine du spa ou du bassin naturel est renseigné par défaut au moment de l'installation du système de filtration.

Selon une réalisation de l'invention, l'unité de commande domotique est également apte à prendre en compte comme paramètre d'entrée une présence d'un dispositif de nettoyage hydraulique.

Selon une réalisation de l'invention, l'unité de commande domotique est également apte à prendre en compte comme paramètre d'entrée un niveau d'encrassement de l'élément filtrant.

Selon une réalisation de l'invention, l'unité de commande domotique est apte à communiquer via une liaison sans-fil avec un terminal de communication d'un utilisateur.

L'invention a également pour objet une piscine, spa, ou bassin naturel comportant un système de filtration tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:

[Fig. 1] La figure 1 est une représentation schématique d'un système de filtration selon la présente invention comportant une unité de commande domotique;

[Fig. 2] La figure 2 est une représentation graphique de l'évolution d'un débit de la pompe de filtration à vitesse variable observable lors d'un pas de filtration.

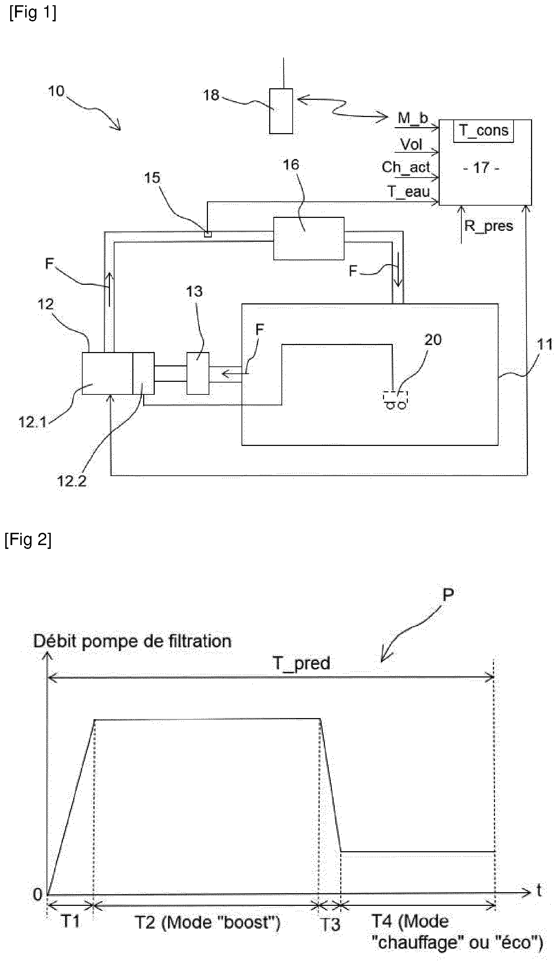

La figure 1 montre un système de filtration 10 pour une piscine, un bassin naturel, ou un spa 11. Ce système de filtration 10 comporte au moins une pompe de filtration 12 à vitesse variable et au moins un élément filtrant 13. La pompe de filtration 12 permet de faire circuler l'eau du bassin à l'intérieur de l'élément filtrant 13. L'élément filtrant 13, qui peut prendre notamment la forme d'un filtre à sable, d'une cartouche de filtration ou d'une poche de filtration, a pour fonction de retenir les impuretés contenues dans le bassin. Le sens de circulation de l'eau est indiqué par les flèches F.

Le système de filtration 10 comporte également un capteur 15 de température d'eau de piscine, par exemple disposé en aval de la pompe de filtration 12. Dans le cas où un dispositif de chauffage 16 de type pompe à chaleur est prévu, le capteur 15 est disposé en amont du dispositif de chauffage 16.

Une unité de commande domotique 17 est en communication avec la pompe de filtration 12 à vitesse variable. L'unité de commande 17 pourra prendre la forme d'un micro-contrôleur ou d'un ordinateur. La communication entre ces deux éléments 12, 17 pourra être assurée par l'intermédiaire d'un bus de communication, par exemple un bus de communication de type RS485.

L'unité de commande domotique 17 est également apte à communiquer via une liaison sans-fil avec un terminal de communication 18 d'un utilisateur prenant par exemple la forme d'un smartphone ou d'une tablette numérique.

L'unité de commande domotique 17 est apte à recevoir en entrée des paramètres d'entrée consistant notamment en:

- un volume d'eau Vol de la piscine, du bassin naturel, ou du spa, qui pourra par exemple être renseigné au moment de l'installation du système de filtration 10,
- une température d'eau T_eau retournée par le capteur de température 15,
- une présence et/ou une activation Ch_act d'un dispositif de chauffage 16 de type pompe à chaleur qui pourra être renseignée par l'utilisateur via le terminal de communication 18,
- une consigne de température d'eau T_cons dont le réglage est expliqué plus en détails ci-après.

L'unité de commande domotique 17 pourra également prendre en compte comme paramètre d'entrée une activation d'un mode baignade (M_b). Le mode baignade M_b pourra par exemple être renseigné par l'utilisateur via le terminal de communication 18.

L'unité de commande domotique 17 est configurée pour adapter un nombre de pas de filtration P mis en œuvre par le système de filtration 10 en fonction des paramètres d'entrée précités Vol, T_eau, Ch_act, T_cons, et M_b.

Comme cela est illustré par la figure 2, un pas de filtration P ayant une durée prédéterminée T_pred, l'unité de commande domotique 17 est en outre configurée pour faire varier, au cours de la durée prédéterminée T_pred d'un pas de filtration P, un mode de fonctionnement du système de filtration 10 lié à une vitesse de rotation de la pompe de filtration 12. Le pas de filtration P présente par exemple une durée de 2 heures. Cette durée prédéterminée T_pred pourra toutefois être adaptée en fonction de l'application.

Avantageusement, l'unité de commande domotique 17 est configurée, au cours de la durée prédéterminée T_pred du pas de filtration P, pour faire fonctionner le système de filtration 10:

- dans un premier mode de fonctionnement dit mode "boost" dans lequel un débit du système de filtration 10 est élevé, et valant par exemple de l'ordre de 30m$^3$/heure, avec un débit de pompe de 11m$^3$/heure (cf. durée T2),
- puis sélectivement:

    - dans un deuxième mode de fonctionnement permettant à un échangeur de chaleur de fonctionner de façon optimale, dit mode "chauffage"; dans lequel le débit du système de filtration 10 est intermédiaire, et valant par exemple de l'ordre de 21 m$^3$/heure, avec un débit de pompe de l'ordre de 8m$^3$/heure, ou
    - dans un troisième mode de fonctionnement, dit mode "éco", dans lequel le débit du système de filtration 10 est bas, et valant par exemple de l'ordre de 14m$^3$/heure, avec un débit de pompe de l'ordre de 4,6m$^3$/heure (cf. période T4).

Les termes "élevé", "intermédiaire", et "bas" sont donc à comprendre par rapport aux valeurs relatives des débits les uns par rapport aux autres. Par "de l'ordre de", on entend une variation possible de plus ou moins 10% autour de la valeur indiquée.

Une vitesse de rotation de la pompe de filtration 12 présente une rampe d'accélération avant d'atteindre une vitesse de rotation correspondant au débit du premier mode de fonctionnement. Cela correspond à la période transitoire T1 sur la figure 2.

Une vitesse de rotation de la pompe de filtration 12 présente une rampe de décélération lors d'un passage du mode "boost" vers le mode "chauffage" ou le mode "éco". Cela correspond à la période transitoire T3 sur la figure 2.

Les durées des périodes T1 et T3 sont inférieures à la minute et valent notamment de l'ordre de 30 secondes.

Avantageusement, une durée de la période de fonctionnement T2 du système de filtration 10 dans le mode "boost" est ajustée en fonction de l'activation ou non du mode baignade M_b. Ainsi, dans le cas où le mode baignade M_b est activé, la phase de fonctionnement dans le mode "boost" est plus longue que dans le cas où le mode baignade M_b n'est pas activé. Suivant un exemple de mise en œuvre, la durée de la phase de fonctionnement du système de filtration 10 dans le mode "boost" est de l'ordre d'une heure lorsque le mode baignade M_b est activé et de l'ordre de 30 minutes lorsque le mode baignade n'est pas activé M_b.

Le mode "chauffage" est mis en œuvre dans le cas où la température d'eau T_eau est inférieure à la consigne de température d'eau T_cons. La consigne de température d'eau T_cons pourra être renseignée par l'utilisateur via le terminal de communication 18. Alternativement, l'utilisateur pourra sélectionner un mode de fonctionnement de la piscine, par exemple un mode "confort", la consigne de température d'eau T_cons étant alors définie par défaut par l'unité de commande domotique 17 pour le mode de fonctionnement sélectionné.

Le nombre de pas de filtration P pourra également être adapté en fonction de la température de l'eau T_eau et des différents paramètres. Le nombre de pas de filtration P sera notamment beaucoup plus faible en hiver qu'en été.

De façon optionnelle, l'unité de commande domotique 17 est également apte à prendre en compte comme paramètre d'entrée une présence R_pres d'un dispositif de nettoyage hydraulique 20. Le dispositif de nettoyage hydraulique 20 pourra prendre la forme d'un balai hydraulique ou d'un robot hydraulique. Le dispositif de nettoyage hydraulique 20 pourra être connecté à un étage de surpression de la pompe 12.2 (à haute pression et faible débit) disposé en parallèle d'un étage de filtration 12.1 (à faible pression et débit élevé) utilisé pour la circulation de l'eau du système de filtration 10.

La détection de la présence R_pres du robot hydraulique 20 pourra être effectuée de façon automatique par la pompe de filtration 12. Alternativement, l'utilisateur pourra informer l'unité de commande domotique 17 de la présence du robot hydraulique 20 via le terminal de communication 18. A cet effet, le terminal de communication 18 enverra un signal d'indication de la présence R_pres du dispositif de nettoyage hydraulique 20 à destination de l'unité de commande domotique 17.

L'unité de commande domotique 17 pourra également être apte à prendre en compte comme paramètre d'entrée un niveau d'encrassement de l'élément filtrant 13. A cet effet, l'unité de commande domotique 17 pourra recevoir en entrée le signal d'un capteur d'encrassement de l'élément filtrant 13.

L'invention a également pour objet une piscine, un spa, ou un bassin naturel comportant un système de filtration 10 tel que précédemment défini.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Système de filtration (10) pour une piscine, un bassin naturel, ou un spa comportant:

   - au moins une pompe de filtration (12) à vitesse variable,
   - au moins un élément filtrant (13),
   - un capteur (15) de température d'eau, et
   - une unité de commande domotique (17) en communication avec la pompe de filtration (12) à vitesse variable,
   - ladite unité de commande domotique (17) étant apte à recevoir en entrée des paramètres d'entrée consistant en :

      - un volume d'eau (Vol) de la piscine, du bassin naturel, ou du spa,
      - une température d'eau (T_eau) retournée par le capteur de température (15),
      - une présence et/ou une activation (Ch_act) d'un dispositif de chauffage (16),
      - une consigne de température d'eau (T_cons),

- l'unité de commande domotique (17) étant configurée pour adapter un nombre de pas de filtration (P) mis en œuvre par le système de filtration (10) en fonction des paramètres d'entrée précités,
- un pas de filtration (P) ayant une durée prédéterminée (T_pred),
- l'unité de commande domotique (17) étant en outre configurée pour faire varier, au cours de la durée prédéterminée (T_pred) d'un pas de filtration (P), un mode de fonctionnement du système de filtration (10) lié à une vitesse de rotation de la pompe de filtration (12).

**2.** Système de filtration selon la revendication 1, **caractérisé en ce que** l'unité de commande domotique (17) est également apte à prendre en compte comme paramètre d'entrée une activation d'un mode baignade (M_b).

**3.** Système de filtration selon la revendication 1 ou 2, **caractérisé en ce que** l'unité de commande domotique (17) est configurée, au cours de la durée prédéterminée (T_pred) du pas de filtration (P), pour faire fonctionner le système de filtration (10):

- dans un premier mode de fonctionnement dit mode "boost" dans lequel un débit du système de filtration (10) est élevé,
- puis sélectivement:

   • dans un deuxième mode de fonctionnement permettant au dispositif de chauffage (16) de fonctionner de façon optimale, dit mode "chauffage"; dans lequel le débit du système de filtration (10) est intermédiaire, ou
   • dans un troisième mode de fonctionnement, dit mode "éco", dans lequel le débit du système de filtration (10) est bas.

**4.** Système de filtration selon la revendication 3, **caractérisé en ce qu'**une vitesse de rotation de la pompe de filtration (12) présente une rampe d'accélération avant d'atteindre une vitesse de rotation correspondant au premier mode de fonctionnement.

**5.** Système de filtration selon la revendication 3 ou 4, **caractérisé en ce qu'**une vitesse de rotation de la pompe de filtration (12) présente une rampe de décélération lors d'un passage du mode "boost" vers le mode "chauffage" ou le mode "éco".

**6.** Système de filtration selon l'une quelconque des revendications 3 à 5, **caractérisé en ce qu'**une durée d'une phase de fonctionnement du système de filtration (10) dans le mode "boost" est ajustée en fonction de l'activation ou non du mode baignade (M_b).

**7.** Système de filtration selon l'une quelconque des revendications 3 à 6, **caractérisé en ce que** le mode "chauffage" est mis en œuvre dans le cas où la température d'eau (T_eau) est inférieure à la consigne de température d'eau (T_cons).

**8.** Système de filtration selon l'une quelconque des revendications 1 à 7, **caractérisé en ce que** le volume d'eau (Vol) de la piscine du spa ou du bassin naturel est renseigné par défaut au moment de l'installation du système de filtration (10).

**9.** Système de filtration selon l'une quelconque des revendications 1 à 8, **caractérisé en ce que** l'unité de commande domotique (17) est également apte à prendre en compte comme paramètre d'entrée une présence (R_pres) d'un dispositif de nettoyage hydraulique (20).

**10.** Système de filtration selon l'une quelconque des revendications 1 à 9, **caractérisé en ce que** l'unité de commande domotique (17) est également apte à prendre en compte comme paramètre d'entrée un niveau d'encrassement de l'élément filtrant (13).

**11.** Système de filtration selon l'une quelconque des revendications 1 à 10, **caractérisé en ce que** l'unité de commande domotique (17) est apte à communiquer via une liaison sans-fil avec un terminal de communication (18) d'un utilisateur.

**12.** Piscine, spa, ou bassin naturel comportant un système de filtration (10) tel que défini selon l'une quelconque des revendications précédentes.

[Fig 1]

[Fig 2]

Débit pompe de filtration

T_pred

0

T1 | T2 (Mode "boost") | T3 | T4 (Mode "chauffage" ou "éco")

P

t

Europäisches
Patentamt

European
Patent Office

Office européen
des brevets

# RAPPORT DE RECHERCHE EUROPEENNE

Numéro de la demande

**EP 21 21 1597**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/118705 A1 (POTTER REED [US]) 16 mai 2013 (2013-05-16) * alinéa [0015] – alinéa [0019]; figures * ----- | 1-12 | INV. E04H4/12 B01D37/04 F04D15/00 |
| X | US 2008/187443 A1 (AGUILAR RAY A [US] ET AL) 7 août 2008 (2008-08-07) * le document en entier * ----- | 1-12 | |
| X | WO 2008/083494 A1 (GECKO ALLIANCE GROUP INC [CA]; CAUDILL DIRK A [US]; COLE ERIC S [US]) 17 juillet 2008 (2008-07-17) * le document en entier * ----- | 1-12 | |
| A | US 10 246 892 B1 (MIRZAEI M REZA [US] ET AL) 2 avril 2019 (2019-04-02) * le document en entier * ----- | 1-12 | |
| A | WO 2013/020181 A1 (POOLRITE RES PTY LTD [AU]; PALMER ROSS LESLIE [AU]) 14 février 2013 (2013-02-14) * le document en entier * ----- | 1-12 | DOMAINES TECHNIQUES RECHERCHES (IPC) E04H B01D F04D |

Le présent rapport a été établi pour toutes les revendications

| Lieu de la recherche | Date d'achèvement de la recherche | Examinateur |
|---|---|---|
| **Munich** | **24 février 2022** | **Hilt, Daniel** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

**EP 4 008 857 A1**

## ANNEXE AU RAPPORT DE RECHERCHE EUROPEENNE
## RELATIF A LA DEMANDE DE BREVET EUROPEEN NO.

EP 21 21 1597

24-02-2022

| Document brevet cité au rapport de recherche | Date de publication | Membre(s) de la famille de brevet(s) | Date de publication |
|---|---|---|---|
| US 2013118705 A1 | 16-05-2013 | AUCUN | |
| US 2008187443 A1 | 07-08-2008 | AUCUN | |
| WO 2008083494 A1 | 17-07-2008 | CA 2672409 A1 | 17-07-2008 |
| | | US 2008168599 A1 | 17-07-2008 |
| | | US 2011035870 A1 | 17-02-2011 |
| | | US 2012117724 A1 | 17-05-2012 |
| | | WO 2008083494 A1 | 17-07-2008 |
| US 10246892 B1 | 02-04-2019 | AUCUN | |
| WO 2013020181 A1 | 14-02-2013 | AU 2012292964 A1 | 13-03-2014 |
| | | AU 2017245458 A1 | 02-11-2017 |
| | | WO 2013020181 A1 | 14-02-2013 |

EPO FORM P0460